# EUROPÄISCHE PATENTANMELDUNG

(11) **EP 4 838 737 A1**
(43) Veröffentlichungstag der Anmeldung: **11.11.2026**
(21) Anmeldenummer: 25175032.9
(22) Anmeldetag: 08.05.2025
(51) Int. Cl.: H02J 3/12, H02J 3/46

(54) **LEISTUNGSREGELUNGSKONZEPT FÜR EINE SPANNUNGSPRÄGENDE WINDENERGIEANLAGE**

(71) Anmelder: Wobben Properties GmbH, 26607 Aurich (DE)
(72) Erfinder: Malekian Boroujeni, Kaveh, 28201 Bremen (DE); Mendonca, Angelo, 26382 Wilhelmshaven (DE); Mackensen, Ingo, 26607 Aurich (DE)
(74) Vertreter: Eisenführ Speiser

(57) **Zusammenfassung**

Die vorliegende Erfindung betrifft ein Verfahren zum Steuern einer Windenergieanlage, umfassend die Schritte: Ansteuern eines Umrichters der Windenergieanlage, um einen elektrischen Strom mittels eines Generators zu erzeugen, umfassend: Steuern eines generatorseitigen aktiven Gleichrichters des Umrichters; und Steuern eines netzseitigen aktiven Wechselrichters des Umrichters; und Einspeisen des elektrischen Stromes in ein elektrisches Versorgungsnetz mit welchem der Umrichter verbunden ist, wobei der generatorseitige aktive Gleichrichter und/oder der netzseitige aktive Wechselrichter mittels eines Sollwertes (Pgen_AG_ref) für die Leistung eines Luftspaltes des Generators der Windenergieanlage gesteuert wird.

## Beschreibung

Die vorliegende Erfindung betrifft ein Verfahren zum Steuern einer Windenergieanlage sowie eine solche Windenergieanlage.

Üblicherweise werden Windenergieanlagen als Windparks am elektrischen Versorgungsnetz im sogenannten Netzfolgebetrieb (engl. grid following) betrieben, d.h. der Windpark bzw. die Windenergieanlagen des Windparks werden in Bezug auf netzseitige Größen wie beispielsweise Spannung und Frequenz mit dem elektrischen Versorgungsnetz synchronisiert bzw. nachgeführt, insbesondere um eine entsprechende elektrische Leistung in das elektrische Versorgungsnetz einzuspeisen.

Windparks bzw. die Windenergieanlagen eines Windparks werden also üblicherweise als Stromquellen bzw. stromprägend betrieben.

Durch einen derartigen stromprägenden bzw. Netzfolge-Betrieb können die Windparks bzw. Windenergieanlagen aber nur bedingt an einer Stützung des elektrischen Versorgungsnetzes teilnehmen.

Um eine verbesserte Stützung des elektrischen Versorgungsnetzes mittels Windparks bzw. Windenergieanlagen zu ermöglichen, können die Windparks bzw. Windenergieanlagen aber auch im sogenannten Netzgeber- bzw. Netzbildner-Betrieb also als Netzformer (engl. grid forming) betrieben werden, d.h. die Windparks bzw. Windenergieanlagen des Windparks prägen eine entsprechende Spannung und Frequenz in das elektrische Versorgungsnetz ein. Der Windpark bzw. die Windenergieanlagen des Windparks werden sodann als Spannungsquellen bzw. spannungsprägend betrieben.

Nachteilig bei bisher bekannten netzbildenden bzw. spannungsprägenden Verfahren (engl. grid forming) ist die geringe Anzahl an Freiheitsgraden in der netzseitigen Steuerung der Wechselrichter der Windenergieanlagen, die wiederkehrend zu reglungstechnischen Problemen führen, wie beispielsweise einem Aufschwingen der Regler durch interferierende Zeitkonstanten oder dergleichen.

Aufgabe der vorliegenden Erfindung ist es daher, wenigstens eines der obengenannten Probleme zu adressieren. Insbesondere soll ein Verfahren zum Steuern einer Windenergieanlage bereitgestellt werden, welches eine verbesserte netzformende bzw. spannungsprägende Steuerung einer Windenergieanlage ermöglicht. Zumindest soll aber eine Alternative bereitgestellt werden.

Erfindungsgemäß wird somit ein Verfahren zum Steuern einer Windenergieanlage vorgeschlagen, umfassend die Schritte: Ansteuern eines Umrichters der Windenergieanlage, um einen elektrischen Strom mittels eines Generators zu erzeugen, umfassend: Steuern eines generatorseitigen aktiven Gleichrichters des Umrichters; und Steuern eines netzseitigen aktiven Wechselrichters des Umrichters; und Einspeisen des elektrischen Stromes in ein elektrisches Versorgungsnetz mit welchem der Umrichter verbunden ist, wobei der generatorseitige aktive Gleichrichter und/oder der netzseitige aktive Wechselrichter mittels eines Sollwertes für die Leistung eines Luftspaltes des Generators der Windenergieanlage gesteuert wird.

Es wird also insbesondere ein Verfahren zum Steuern einer Windenergieanlage vorgeschlagen, welches die Luftspaltleistung des Generators berücksichtigt, insbesondere so, dass eine verbesserte netzbildende bzw. spannungsprägende Steuerung für die Windenergieanlage bereitgestellt wird.

Durch das hierin beschriebene Verfahren ist die Windenergieanlage insbesondere dazu eingerichtet, als Netzbildner zu fungieren bzw. einen spannungsprägenden Betrieb auszuführen, also als ein sogenanntes grid forming means verwendet zu werden.

Vorzugsweise wird der generatorseitige aktive Gleichrichter in Abhängigkeit einer Leistungsabweichung gesteuert.

Die Leistungsabweichung ist insbesondere auf den generatorseitigen aktiven Gleichrichter bezogen und ergibt sich bevorzugt aus Werten des Zwischenkreises des Umrichters, wie beispielsweise der Zwischenkreisspannung.

Vorzugsweise wird der generatorseitige aktive Gleichrichter in Abhängigkeit eines Arbeitspunktes für einen Gleichspannungszwischenkreis des Umrichters gesteuert.

Der Arbeitspunkt für den Gleichspannungszwischenkreis kann beispielsweise durch eine überlagerte Steuereinheit vorgegeben sein und/oder sich auf netzseitige Größen am Netzanschlusspunkt der Windenergieanlage beziehen, wie beispielsweise die Wirkleistung, die Blindleistung und/oder die Netzspannung.

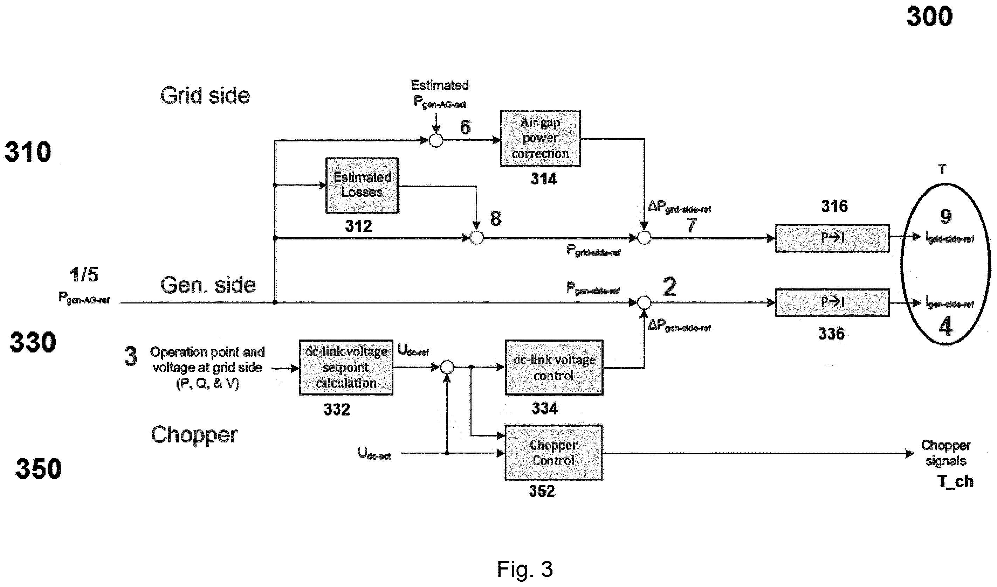

Durch die Steuerung des generatorseitigen aktiven Gleichrichters mittels eines Arbeitspunktes ist es insbesondere möglich, eine schnelle Regelung für den generatorseitigen aktiven Gleichrichter zu entwerfen, wie beispielsweise mit einer schnellen Steuerung 330, wie in Fig. 3 gezeigt. Vorzugsweise wird jener schnellen Steuerung 330 für den Gleichspannungszwischenkreis noch eine langsamere Steuerung unterlagert, wie beispielsweise die netzseitige Wechselrichtersteuerung 310 in Fig. 3, die die Luftspaltleistung berücksichtigt.

Ein derartiger Aufbau hat den Vorteil, dass auf einen Netzfehler zunächst schnell reagiert und anschließend langsamer nachgeregelt werden kann. Kommt es beispielsweise zu einem Netzfehler, so fällt die netzseitige Leistung ab und die Spannung im Zwischenkreis steigt an. Jener Anstieg der Zwischenkreisspannung wird sodann schnell mittels des hierin beschriebenen Verfahrens ausgeregelt, und die netzseitige Wechselrichterleistung wird entsprechend langsamer nachgeführt.

Vorzugsweise umfasst das Verfahren ferner den Schritt: Erzeugen eines Sollwertes für einen Strom des generatorseitigen aktiven Gleichrichters.

Das hierin beschriebene Verfahren arbeitet also insbesondere mit Strom-Sollwerten für den Umrichter, also den generatorseitigen aktiven Gleichrichter und/oder den netzseitigen aktiven Wechselrichter.

Vorzugsweise werden sowohl der generatorseitige aktive Gleichrichter als auch der netzseitige aktive Wechselrichter mittels des Sollwertes für die Leistung eines Luftspaltes eines Generators der Windenergieanlagen gesteuert.

Dies bedeutet insbesondere, dass sowohl der generatorseitige aktive Gleichrichter als auch der netzseitige aktive Wechselrichter unter Berücksichtigung der Luftspaltleistung des Generators gesteuert bzw. geregelt werden.

Bevorzugt wird die Luftspaltleistung geschätzt und/oder aus Werten oder Parametern der Steuerung bestimmt.

Vorzugsweise wird der netzseitige aktive Wechselrichter in Abhängigkeit einer Soll-Ist-Differenz gesteuert, beispielsweise aus einem oder dem Sollwert und einem Ist-Wert für die Luftspaltleistung des Generators der Windenergieanlage.

Vorzugsweise wird der netzseitige aktive Wechselrichter in Abhängigkeit einer Leistungsabweichung gesteuert.

Die Leistungsabweichung ist insbesondere auf den netzseitigen aktiven Wechselrichter bezogen und ergibt sich bevorzugt aus Werten der Luftspaltleistung.

Vorzugsweise wird der netzseitige aktive Wechselrichter unter Berücksichtigung von Umrichterverlusten und/oder Verlusten im Stator des Generators (estimated losses) gesteuert.

Die Umrichterverluste sind beispielsweise sogenannte Schaltverluste oder dergleichen.

Die Verluste im Stator sind beispielsweise elektrische und/oder magnetische Verluste oder dergleichen.

Vorzugsweise umfasst das Verfahren ferner den Schritt: Erzeugen eines Sollwertes für einen Strom des netzseitigen aktiven Wechselrichters.

Erfindungsgemäß wird ferner eine Windenergieanlage vorgeschlagen, wobei die Windenergieanlage eine Steuereinheit aufweist, die dazu eingerichtet ist, mittels einer Vorwärtskopplung (feed forward) des Sollwertes einen Soll-Strom für den netzseitigen aktiven Wechselrichter und einen Soll-Strom für den generatorseitigen aktiven Gleichrichter zu erzeugen.

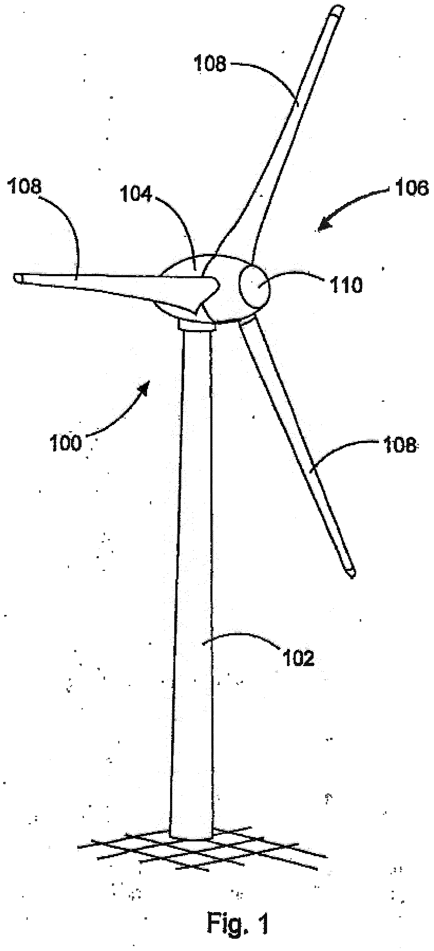

Unter einer Windenergieanlage wird hierin insbesondere eine technische Anlage verstanden, die die Bewegungsenergie des Windes in elektrische Energie umwandelt und in ein elektrisches Netz, wie beispielsweise ein Windparknetz oder ein elektrisches Versorgungsnetz, einspeist. Die Windenergieanlage ist dabei insbesondere dergestalt, dass sie gewerblich im großen Maßstab nutzbar ist. Eine derartige Windenergieanlage ist beispielsweise in der nachstehenden Figur 1 gezeigt.

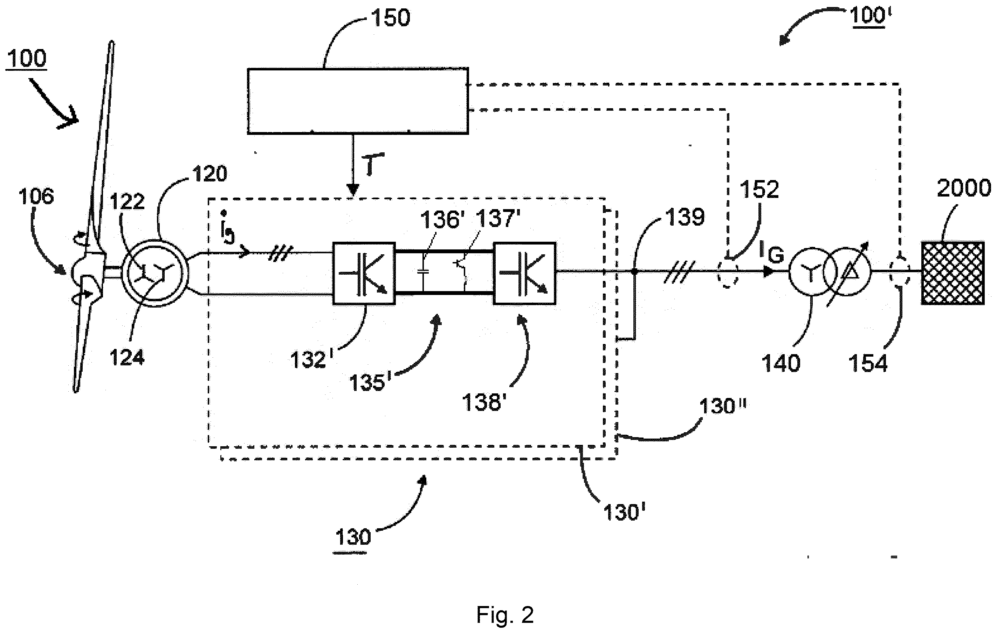

Zudem weist die Windenergieanlage insbesondere einen generatorseitigen aktiven Gleichrichter und/oder einen elektrischen Strang auf, wie beispielsweise in der nachstehenden Figur 2 gezeigt.

Vorzugsweise ist die Steuereinheit dazu eingerichtet, ein hierin beschriebenes Verfahren auszuführen und/oder ist, wie beispielsweise, in der nachstehenden Figur 3 gezeigt; ausgebildet.

Die vorliegende Erfindung ist nachfolgend anhand der begleitenden Figuren näher erläutert, wobei für gleiche oder ähnliche Bauteile oder Baugruppen dieselben Bezugszeichenverwendet werden.
- Fig. 1: zeigt schematisch und exemplarisch eine perspektivische Ansicht einer Windenergieanlage in einer Ausführungsform.
- Fig. 2: zeigt schematisch und exemplarisch einen elektrischen Strang einer Windenergieanlage in einer Ausführungsform.
- Fig. 3: zeigt schematisch und exemplarisch den Aufbau einer Steuereinheit eines Umrichters.

Fig. 1 zeigt schematisch und exemplarisch eine perspektivische Ansicht einer Windenergieanlage 100.

Die Windenergieanlage 100 ist als Auftriebsläufer mit horizontaler Achse und drei Rotorblättern 200 auf der Luvseite, insbesondere als Horizontalläufer, ausgebildet.

Die Windenergieanlage 100 weist einen Turm 102 und eine Gondel 104 auf.

An der Gondel 104 ist ein aerodynamischer Rotor 106 mit einer Nabe 110 angeordnet.

An der Nabe 110 sind drei Rotorblätter 108, insbesondere symmetrisch zur Nabe 110, angeordnet, bevorzugt um 120° versetzt.

Fig. 2 zeigt schematisch und exemplarisch einen elektrischen Strang 100' einer Windenergieanlage 100, wie bevorzugt in Figur 1 gezeigt.

Die Windenergieanlage 100 weist einen aerodynamischen Rotor 106 auf, der mit einem Generator 120 der Windenergieanlage 100 mechanisch verbunden ist.

Der Generator 120 ist bevorzugt als 6-phasiger Synchrongenerator, insbesondere mit zwei dreiphasigen Systemen 122, 124, ausgebildet, die um 30 Grad phasenverschoben und voneinander entkoppelt sind.

Der Generator 120 ist über einen Umrichter 130 und mittels eines Transformators 140 mit einem elektrischen Versorgungsnetz 2000 verbunden bzw. an das elektrische Versorgungsnetz 2000 angeschlossen.

Um die vom Generator 120 erzeugte elektrische Leistung in einen einzuspeisenden Strom iG umzuwandeln, weist der Umrichter 130 für jedes der elektrischen Systeme 122, 124 wenigstens jeweils ein Umrichtermodul 130', 130" auf, wobei die Umrichtermodule 130', 130" im Wesentlichen baugleich ausgeführt sind.

Die Umrichtermodule 130', 130" weisen an einem Umrichtermoduleingang einen aktiven Gleichrichter 132' auf. Der aktive Gleichrichter 132' ist elektrisch mit einem Wechselrichter 137' verbunden, bspw. über einen Gleichspannungszwischenkreis 135'. Im Gleichspannungszwischenkreis 135' sind ferner eine Gleichspannungskapazität 136' und ein elektrischer Chopper 137' angeordnet. Die Gleichspannungskapazität kann dabei beispielsweise als Zwischenkreiskondensator(en) ausgebildet sein.

Die zwei, insbesondere statorseitig, voneinander entkoppelten, dreiphasigen Systeme 122, 124 werden bspw. netzseitig an einem Knotenpunkt 139 zu einem dreiphasigen Gesamtsystem zusammengeführt, welches den einzuspeisenden Gesamtstrom iG führt.

Um den einzuspeisenden Gesamtstrom iG in das elektrische Versorgungnetz 2000 einzuspeisen, ist ferner am Ausgang der Windenergieanlage ein Windenergieanlagentransformator 150 vorgesehen, der bevorzugt im Stern-Dreieck geschaltet ist und die Windenergieanlage 100 mit dem elektrischen Versorgungsnetz 2000 verbindet.

Das elektrische Versorgungsnetz 2000, an das die Windenergieanlage 100, 100' mittels des Transformators 140 angeschlossen ist, kann beispielsweise ein Windparknetz oder ein elektrisches Versorgungs- oder Verteilnetz sein.

Zum Steuern der Windenergieanlage 100 bzw. des elektrischen Stranges 100' ist ferner eine Windenergieanlagensteuereinheit 150 vorgesehen.

Die Windenergieanlagensteuereinheit 150 ist dabei insbesondere dazu eingerichtet, einen einzuspeisenden Gesamtstrom iG einzustellen, insbesondere durch Ansteuern der generatorseitigen aktiven Gleichrichter 132', 132" bzw. der netzseitigen aktiven Wechselrichter 137', 137".

Das Ansteuern der generatorseitigen aktiven Gleichrichter 132', 132" und/oder der netzseitigen aktiven Wechselrichter 137', 137"erfolgt dabei insbesondere, wie vorstehend oder nachstehend beschrieben, bevorzugt mittels oder in Abhängigkeit der Treibersignale T.

Insbesondere wird der Umrichter 130 spannungsprägend betrieben und/oder ist als B2B-Converter (back-to-back converter) ausgeführt.

Die Windenergieanlagensteuereinheit 150 ist bevorzugt auch dazu eingerichtet, den Gesamtstrom iG mittels eines Stromerfassungsmittels 162 zu erfassen. Bevorzugt werden hierfür insbesondere die Ströme eines jeden Umrichtermoduls 137' in jeder Phase erfasst.

Zudem weist die Steuereinheit auch Spannungserfassungsmittel 164 auf, die dazu eingerichtet sind, eine Netzspannung, insbesondere des elektrischen Versorgungnetzes 2000, zu erfassen.

Fig. 3 zeigt schematisch und exemplarisch den Aufbau 300 einer Steuereinheit eines Umrichters, wie beispielsweise in Fig. 2 dargestellt.

Der Aufbau 300 umfasst im Wesentlichen eine Steuerung 310 für den netzseitigen Wechselrichter, eine Steuerung 330 für den generatorseitigen Gleichrichter und eine Steuerung 350 für den Chopper. Bevorzugt ist die Steuerung 310 träge ausgeführt und/oder die Steuerung 330 schnell. Insbesondere ist die Steuerung 330 schneller ausgeführt als die Steuerung 310.

Die Steuerung 310 für den netzseitigen Wechselrichter umfasst im Wesentlichen ein Modul 312 zur Bestimmung von Verlusten, ein Modul 314 zur Korrektur der Luftspaltleistung und ein Modul 316 zur Erzeugung eines Sollwertes Igrid_side_ref für den netzseitigen Strom.

Das Modul 312 zur Bestimmung von Verlusten ermittelt eine Soll-Leistung Pgrid_side_ref aus dem Sollwert Pgen_AG_ref für die Leistung des Luftspaltes des Generators der Windenergieanlage, insbesondere unter Berücksichtigung der Umrichterverluste und/oder der Verluste im Stator des Generators.

Das Modul 314 zur Korrektur der Luftspaltleistung bzw. des Leistungssollwertes ermittelt aus einer Abweichung zwischen dem Sollwert Pgen_AG_ref für die Leistung des Luftspaltes und einem geschätzten Sollwert Pest_gen_AG_reffürdie Leistung des Luftspaltes eine Leistungsabweichung ΔPgrid_side_ref. Das Modul 314 korrigiert also den Leistungssollwert des netzseitigen aktiven Wechselrichters, insbesondere aufgrund einer anhaltenden Abweichung zwischen dem Sollwert und dem geschätzten Istwert der Luftspaltleistung.

Das Modul 316 zur Erzeugung eines Sollwert Igrid_side_ref ermittelt aus der Leistungsabweichung ΔPgrid_side_ref und der Soll-Leistung Pgrid_side_ref entsprechende Sollwerte für den netzseitigen aktiven Wechselrichter.

Das Modul 316 kann bevorzugt ein netzbildendes Steuerverfahren beinhalten und/oder ausführen, wie beispielsweise eine virtuelle Synchronmaschine, welche eine virtuelle Trägheit aufweist und die Steuerung 310 im Vergleich zur Steuerung 330 träger bzw. langsamer macht.

Die Steuerung 330 für den generatorseitigen Gleichrichter umfasst im Wesentlichen ein Modul 332 zur Bestimmung von Arbeitspunkten, insbesondere für den Gleichspannungszwischenkreis, ein Modul 334 zur Steuerung der Zwischenkreisspannung und ein Modul 336 zur Erzeugung eines Sollwert Igen_side_ref für den generatorseitigen Strom.

Das Modul 332 zur Bestimmung von Arbeitspunkten ermittelt eine Soll-Zwischenkreisspannung Udc_ref aus den Arbeitspunkten der Windenergieanlage, die beispielsweise durch eine übergeordnete Steuerung vorgegebenen werden, und etwaigen netzseitigen Größen, wie Wirkleistung P, Blindleistung Q und Netzspannung V.

Das Modul 334 zur Steuerung der Zwischenkreisspannung ermittelt aus einer Differenz der Soll-Zwischenkreisspannung Udc_ref und der Ist-Zwischenkreisspannung udc_act eine Leistungsabweichung ΔPgen_gen_ref.

Das Modul 336 zur Erzeugung eines Sollwert Igen_side_ref ermittelt aus der Leistungsabweichung ΔPgen_gen_ref und einem Sollwert Pgen_AG_ref für die Leistung des Luftspaltes des Generators der Windenergieanlage entsprechende Sollwerte für den generatorseitigen aktiven Umrichter.

Die Steuerung 350 für den Chopper umfasst im Wesentlichen ein Modul 352 zur Steuerung des Choppers, welches aus der Ist-Zwischenkreisspannung udc_act und einer Regelabweichung zwischen der Ist-Zwischenkreisspannung udc_act und der Soll-Zwischenkreisspannung udc_ref entsprechende Choppersignale T_ch erzeugt.

Die Ist-Zwischenkreisspannung udc_act wird zudem auch auf die Steuerung 330 für den generatorseitigen aktiven Gleichrichter gegeben.

Bevorzugt bildet der Chopper einen wesentlichen Teil des Reglungssystems aus, der bei der hierin beschriebenen Regelung wenigstens die nachfolgenden Aufgaben übernimmt, nämlich: Schutz vor unzulässiger Überspannung im Gleichspannungszwischenkreis und/oder Negativer Energiepuffer zur Beherrschung der netzseitigen Leistungsreduktion, z.B. infolge einer Netzstörung.

Durch die Steuerung des generatorseitigen aktiven Gleichrichters mittels eines Arbeitspunktes ist es insbesondere möglich, eine schnelle Regelung für den generatorseitigen aktiven Gleichrichter zu entwerfen, wie beispielsweise mit der Steuerung 330 in Fig. 3 gezeigt.

Vorzugsweise wird jener schnellen Steuerung 330 für den Gleichspannungszwischenkreis noch eine langsamere Steuerung unterlagert, wie beispielsweise die netzseitige aktive Wechselrichtersteuerung 310 in Fig. 3, die die Luftspaltleistung berücksichtigt.

Ein derartiger Aufbau hat den Vorteil, dass auf einen Netzfehler zunächst schnell reagiert werden und anschließend langsamer nachgeregelt werden kann. Kommt es beispielsweise zu einem Netzfehler, so fällt die netzseitige Leistung ab und die Spannung im Zwischenkreis steigt an. Jener Anstieg der Zwischenkreisspannung wird sodann schnell mittels des hierin beschriebenen Verfahrens ausgeregelt, und die netzseitige Wechselrichterleistung wird entsprechend langsamer nachgeführt.

Die Steuerung des Umrichters ist also insbesondere kaskadiert ausgeführt, insbesondere so, dass zuerst die Zwischenkreisspannung schnell geregelt und anschließend die netzseitige Ausgangsleistung langsamer nachgeführt wird.

### Bezugszeichenliste

- 100: Windenergieanlage
- 100': elektrischer Strang, insbesondere der Windenergieanlage
- 104: Gondel, insbesondere der Windenergieanlage
- 106: Rotor, insbesondere der Windenergieanlage
- 108: Rotorblatt, insbesondere der Windenergieanlage
- 110: Nabe, insbesondere der Windenergieanlage

- 120: Generator, insbesondere der Windenergieanlage
- 122: erstes elektrisches System, insbesondere des Generators
- 124: zweites elektrisches System, insbesondere des Generators
- 130: Umrichter, insbesondere Leistungsumrichter einer Windenergieanlage
- 130': Umrichtermodul, insbesondere für das erste elektrische System
- 130": Umrichtermodul, insbesondere für das zweite elektrische System
- 132: aktiver Gleichrichter
- 132': aktives Gleichrichtermodul, insbesondere für das erste elektrische System
- 132': aktives Gleichrichtermodul, insbesondere für das zweite elektrische System
- 135': Gleichspannung, insbesondere für das erste elektrische System
- 136': Gleichspannungskapazität
- 137': elektrischer Chopper
- 138: Wechselrichter
- 138': Wechselrichtermodul, insbesondere für das erste elektrische System
- 138': Wechselrichtermodul, insbesondere für das zweite elektrische System
- 139: Knotenpunkt
- 140: Transformator, insbesondere der Windenergieanlage
- 150: Windenergieanlagensteuereinheit
- 152: Messmittel, insbesondere zur Strom- und/oder Spannungserfassung
- 154: Messmittel, insbesondere zur Strom- und/oder Spannungserfassung

- 300: Ansicht einer Steuerung
- 310: Steuerung, insbesondere einen netzseitigen aktiven Wechselrichter
- 312: Modul zur Bestimmung von Verlusten
- 314: Modul zur Korrektur der Luftspaltleistung
- 316: Modul zur Erzeugung eines Sollwertes
- 330: Steuerung, insbesondere für einen generatorseitigen aktiven Gleichrichter
- 332: Modul zur Bestimmung von Arbeitspunkten
- 334: Modul zur Steuerung der Zwischenkreisspannung
- 350: Steuerung, insbesondere für einen Chopper
- 352: Modul zur Steuerung des Choppers

- 1000: Windpark
- 1100: Windparknetz, insbesondere zum Leistungstransport
- 1200: Netzanschlusspunkt, insbesondere des Windparks

- ig: Gesamtstrom, insbesondere des Generators
- iG: Gesamtstrom, insbesondere des Umrichters
- T: Treibersignale, insbesondere für den Umrichter
- T_ch: Choppersignale

- Igrid_side_ref: Soll-Strom für die Netzseite
- Igen_side_ref: Soll-Strom für die Generatorseite
- Pgen_AG_ref: Soll-Leistung für den Luftspalt
- Pest_gen_AG_ref: geschätzte Leistung für den Luftspalt
- ΔPgrid_side_ref.: Abweichung von der Soll-Leistung
- Pgrid_side_ref: Soll-Leistung für die Netzseite
- ΔPgen_gen_ref.: Abweichung in der Generatorleistung
- udc_act: Ist-Zwischenkreisspanung
- Udc_ref: Soll-Zwischenkreisspannung

- P: Wirkleistung
- Q: Blindleistung
- V: Netzspannung

## Patentansprüche

1. Verfahren zum Steuern einer Windenergieanlage, umfassend die Schritte:
- Ansteuern eines Umrichters der Windenergieanlage, um einen elektrischen Strom mittels eines Generators zu erzeugen, umfassend:
- Steuern eines generatorseitigen aktiven Gleichrichters des Umrichters; und
- Steuern eines netzseitigen aktiven Wechselrichters des Umrichters; und
- Einspeisen des elektrischen Stromes in ein elektrisches Versorgungsnetz mit welchem der Umrichter verbunden ist, wobei
- der generatorseitige aktive Gleichrichter und/oder der netzseitige aktive Wechselrichter mittels eines Sollwertes (Pgen_AG_ref) für die Leistung eines Luftspaltes des Generators der Windenergieanlage gesteuert wird.

2. Verfahren nach Anspruch 1, wobei
- der generatorseitige aktive Gleichrichter in Abhängigkeit einer Leistungsabweichung (ΔPgen_side_ref) gesteuert wird.

3. Verfahren nach Anspruch 1 oder 2, wobei
- der generatorseitige aktive Gleichrichter in Abhängigkeit eines Arbeitspunktes (P,Q, V) für einen Gleichspannungszwischenkreis des Umrichters gesteuert wird.

4. Verfahren nach einem der vorstehenden Ansprüche, ferner umfassend den Schritt:
- Erzeugen eines Soll-Wertes (Igen-side-ref) für einen Strom des generatorseitigen aktiven Gleichrichters.

5. Verfahren nach einem der vorstehenden Ansprüche, wobei
- sowohl der generatorseitige aktive Gleichrichter als auch der netzseitige aktive Wechselrichter mittels des Sollwertes (Pgen_AG_ref) für die Leistung eines Luftspaltes eines Generators der Windenergieanlage gesteuert werden.

6. Verfahren nach einem der vorstehenden Ansprüche, wobei
- der netzseitige aktive Wechselrichter in Abhängigkeit einer Soll-Ist-Differenz gesteuert wird, aus dem Sollwert (Pgen_AG_ref) und einem Ist-Wert (Pgen_AG_act) für den Luftspalt des Generators der Windenergieanlage.

7. Verfahren nach einem der vorstehenden Ansprüche, wobei
- der netzseitige aktive Wechselrichter in Abhängigkeit einer Leistungsabweichung (ΔPgrid_side_ref) gesteuert wird und/oder
- der netzseitige aktive Wechselrichter unter Berücksichtigung von Umrichterverlusten und/oder Verlusten im Stator des Generators (estimated losses) gesteuert wird.

8. Verfahren nach einem der vorstehenden Ansprüche, wobei
- ein Negativer Energiepuffer zur Beherrschung der netzseitigen Leistungsreduktion vorgesehen ist, insbesondere ein Chopper im Zwischenkreis des Umrichters.

9. Verfahren nach einem der vorstehenden Ansprüche, ferner umfassend den Schritt:
- Erzeugen eines Soll-Wertes (Igen-side-ref) für einen Strom des netzseitigen aktiven-Wechselrichters.

10. Windenergieanlage mit einer Steuereinheit, die dazu eingerichtet ist:
- mittels einer Vorwärtskopplung (feed forward) des Sollwertes (Pgen_AG_ref) einen Soll-Strom für den netzseitigen aktiven Wechselrichter (Igen-side-ref) und einen Soll-Strom für den generatorseitigen aktiven Gleichrichter (Igen-side-ref) zu erzeugen.

11. Windenergieanlage nach Anspruch 10, wobei
- die Steuereinheit dazu eingerichtet ist, ein Verfahren nach einem der Ansprüche 1 bis 10 auszuführen.
